# EUROPEAN PATENT APPLICATION

(11) **EP 3 496 066 A1**
(43) Date of publication of application: **12.06.2019**
(21) Application number: 17206207.7
(22) Date of filing: 08.12.2017
(51) Int. Cl.: G08G 1/096, G08G 1/0962, G06K 9/00

(54) **METHOD FOR DETERMINING THE STATUS OF A TRAFFIC SIGNAL AND DRIVER ASSISTANCE SYSTEM FOR PERFORMING THE METHOD**

(71) Applicant: Continental Automotive GmbH, 30165 Hannover (DE)
(72) Inventor: Arya, Ratan, 560100 Bangalore (IN); Miraskar, Shashi, 560040 Bangalore (IN)
(74) Representative: Reuter, Andreas

(57) **Abstract**

A method for determining the status of a traffic signal and a computer system for performing the method are provided.

## Description

### BACKGROUND

Many traffic lights nowadays are equipped with a countdown timer which indicates for how long the traffic light will remain red or green to inform a driver of a vehicle for how long the traffic light will remain red or green. In addition, traffic lights can provide this information in digital form via wireless communication to a driver of a vehicle provided that the vehicles comprise a system to receive and process this wireless information and driver assistance system can process this digital information.

However, still a rather limited number of traffic lights can provide this information on the status of a traffic light via a wireless connection and few vehicles are equipped with corresponding system for receiving and processing this digital information.

Moreover, many vehicles are equipped with automatic systems for starting and stopping the engine of a vehicle to save fuel when the vehicle has stopped. However, the disadvantages of the start stop system are that that with frequent use the battery charge and the battery life will deteriorate more rapidly. To address these problems often more than one battery has been used in vehicles which results in extra costs and extra weight. Moreover, if the automatic start stop system is activated each time the vehicle is idle, for example, when the vehicle has to briefly stop in front a traffic light when a traffic light is close to turning from red to green, the engine will be stopped rather frequently adding an extra amount of wear and tear on the engine. It is assumed that due to start stop system the number is increased from 50,000 stop-start events in a lifetime to 500,000 start-stop event adding a major challenge to the durability and the life an engine's bearings.

Many vehicles are equipped with driver-assistance systems comprising cameras and the invention addresses the above-mentioned problems by using those driver-assistance systems comprising cameras.

### SUMMARY

The invention is defined by the appended claims.

Disclosed is a computer-implemented method for determining the status of a traffic signal by a vehicle driving in a direction comprising:
a. Capturing an image frame with a camera;
b. Determining that the image frame comprises a traffic light comprising a traffic light panel;
c. Determining that the image frame comprises a countdown timer in proximity or comprised in the traffic light panel;
d. Performing optical character recognition on the section of the image frame comprising the count-down timer to provide a value indicated by the countdown timer;
e. Determining based on the image frame comprising a traffic light comprising a traffic light panel or characters displayed by the countdown timer whether the traffic light allows or not allows the vehicle to proceed in the direction of the vehicle;
f. Determining the halt time before traffic lights allows the vehicle to proceed in the direction of the vehicle or the time left the traffic light allows the vehicle to proceed in the direction of the vehicle; and
g. Outputting the result of the determination of step f.

Step g. can comprise outputting an optical or/and acoustic alarm if the halt time or the time left is less than a predetermined value.

The method can comprise determining the distance to the traffic light.

The vehicle can be equipped with an automatic engine start stop system.

The method can be further defined in that it is determined in step e. that the traffic light comprising a traffic light panel does not allow the vehicle to proceed in the direction of the vehicle and the method further comprises:
h. Determining a halting time that a vehicle will halt before a traffic light considering the time the vehicle will need to cover the determined distance to the traffic light and the value indicated by the countdown timer;
i. Automatically switch off the engine if the deter-mined halting time is greater than a predetermined engine stop time threshold.

6The method can further comprise:
j. Determining an updated halting time and switching on the engine if the determined halting time is the same or lower than a predetermined engine start time threshold.

The countdown timer can be integrated into the traffic light panel.

The traffic light panel can indicate that the vehicle is not allowed to proceed by a red light.

The traffic light panel can indicate that the vehicle is not allowed to proceed by a green light.

Disclosed is also a driver assistance system (1000) for determining the status of a traffic signal comprising:
a. a camera (1002) operable to capture a plurality of images or a single image;
b. a processor (1001) operatively connected to the camera, wherein the processor is operable to per-form the operations defined in the preceding claims.

The driver assistance system can further comprise a RADAR or a LIDAR and the processor is operable to use the information to determine the distance to the traffic light.

Disclosed is also vehicle comprising the driver assistance system described above.

The vehicle can be a car, motorcycle, or a truck.

Disclosed is also a computer-system (1000) comprising a memory (1003) and a processor (1001), wherein said processor is operable to perform the operations defined by the above described methods.

The Computer-system (1000) can be an application-specific integrated circuit, ASIC, or an field programmable gate array, FPGA.

### BRIEF DESCRIPTION OF FIGURES

Figure 1 illustrates the disclosed methods.
Figure 2 illustrates a particular aspect of the disclosed methods.
Figure 3 illustrates a further particular aspect of the disclosed methods.
Figure 4A illustrates a traffic light in a red status comprising a traffic light panel with a separate countdown timer.
Figure 4B illustrates a traffic light in a red status comprising a traffic light panel with a countdown timer integrated into a light of the traffic light panel.
Figure 5A illustrates a traffic light in a green status comprising a traffic light panel with a separate countdown timer.
Figure 5B illustrates a traffic light in a green status comprising a traffic light panel with a countdown timer integrated into a light of the traffic light panel.
Figure 6 describes a computer system suitable for performing the disclosed method.

### DETAILED DESCRIPTION

Reference will now be made in detail to the present disclosure, examples of which are illustrated in the accompanying drawings, wherein like reference numerals refer to the like elements throughout. The aspects of the disclosure are described below to explain the teachings herein by referring to the Figures.

Before explaining the disclosure in detail, it is to be understood that the invention is not limited in its application to the details of design and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting. The indefinite articles "a" and "an" and the definite article "the" also refers to the corresponding plural. The headings are merely provided to assist in the understanding of the invention and should not be construed as delimiting the content of the sections against each other.

### Methods for determining the status of a traffic signal

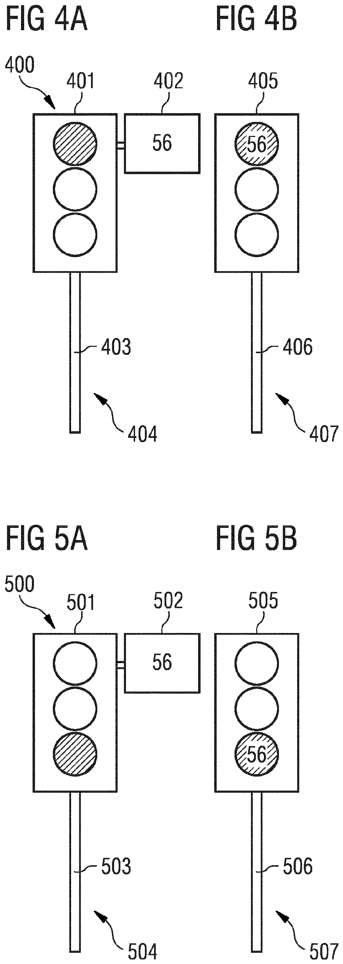

Traffic lights also known as traffic signals, traffic lamps, traffic semaphore, signal lights, stop lights, robots, and traffic control signals, are signaling devices positioned at road intersections, pedestrian crossings, and other locations to control flows of traffic. Examples thereof are provided in figures 4A, 4B, 5A, and 5D. Traffic lights are often affixed to traffic posts 403, 406, 503, 506, but they can also be affixed to cable structures, walls etc.

Traffic lights indicate that a driver of a vehicle is not allowed or allowed to proceed in a direction. In the simplest version this direction is the straight-forward direction. Additionally integrated signals like lights displaying an arrow form can indicate that a driver is not allowed or allowed to proceed to the right or the left depending on the direction of the arrow or any other direction that is not the straight-forward direction.
Traffic lights usually consist of a traffic light panel 401, 405, 501, 50 which in turn consist of three signal lamps or lights wherein the red light usually indicates that a driver of a vehicle is not allowed to proceed in a direction indicated by the traffic light and a green light indicates that a driver of a vehicle is allowed to proceed in a direction indicated by the traffic light. A red light and a green light do usually not occur simultaneously.
Traffic lights are often also provided with a countdown timer 402, 502 which displays by a number counting down how long a status of the traffic light will remain. Usually the unit for the number although not indicated is in seconds. The count-down timers can be positioned as a unit separate from the traffic light panel 402, 502 or a number can be integrated into the traffic lamps/lights as in figures 4B and 5B.
The numbers themselves can be colored (i.e. red or green) in the color corresponding to the status of the traffic light or in the case where the countdown timer is integrated into a traffic lamp/light in a color different from the lamp into which it is integrated.
Traffic lights can have a vertical traffic panel as shown in figures 4A-5B or a horizontal traffic panel (not shown).

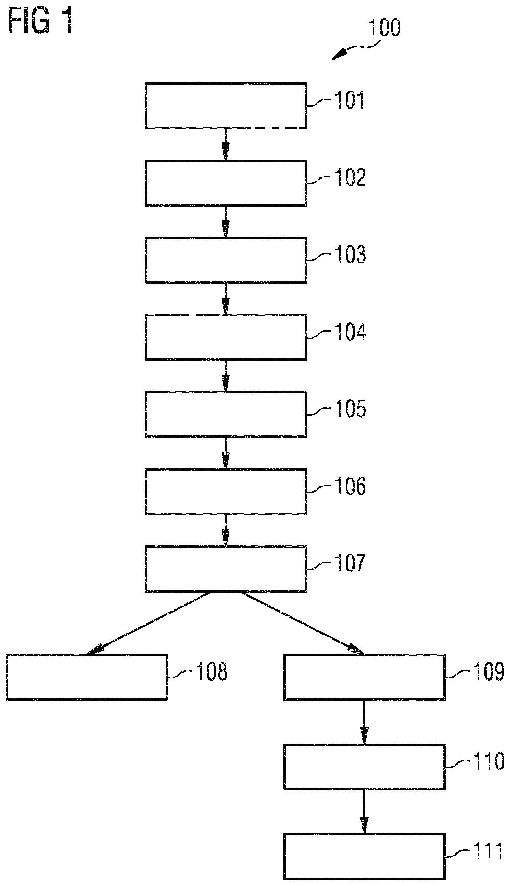

Figure 1 illustrates the disclosed method. The method is based on at least one camera integrated into a vehicle which is part of a computer system integrated into the vehicle. The camera can capture at least one image frame 101. The capture rate can also vary. It is determined that the image frame comprises a traffic light comprising a traffic light panel 102. This can be achieved by a module of the computer system for traffic light recognition. Then, it can be determined that the captured image comprises a countdown timer in proximity to the traffic light panel 103 and a section comprising the countdown timer can be indicated, for example, by a circle or rectangle. Proximity can mean within 2 meters, 1,5 meters or 1 meter of the traffic light panel. The system can distinguish between a countdown timer and other traffic signs or, in particular, traffic lights by appropriate traffic sign recognition algorithms.
Then, optical character recognition (OCR) is performed on the section of the image frame comprising the countdown timer comprising the characters indicating the respective numbers which provides a value displayed by the countdown timer which is now computer-readable 104.
Then, it is determined whether the traffic light comprising a traffic light panel allows the vehicle to proceed or not to proceed 105. This can be achieved by determining whether the traffic light panel itself indicates whether the vehicle is allowed to proceed or not to proceed, i.e. determining whether the traffic light panel is in the red or green status or by determining whether the (separate) countdown timer indicates whether the vehicle is allowed to proceed or not to proceed, i.e. determining whether the characters displayed by the countdown timer are in a red or green status.
Due to the last determination it is possible to determine whether the countdown timer indicates the time until the traffic light will turn green or turn red, i.e. if the status of the traffic light is red, it is determined that the traffic light will turn green and vice versa.
Since the system has now determined the value displayed by the countdown timer and has also determined whether the traffic light is in the red or green status, the halt time before the traffic light allows the vehicle to proceed in the direction of the vehicle (red status) or the time left the traffic light allows the vehicle to proceed in the direction of the vehicle (green status) can be determined 106.
The result of this determination is output 107. Output means that the system makes this result of the determination available either to further processing within the system or/and available to the driver of the vehicle in the form of a displayed number indicating the read characters of the countdown timer or in the form of acoustic or optical signal that alerts the attention of the driver, or a combination of the displayed number and the signal. The optical signal may be icon that is flashing and the acoustic signal may be an alarm tone. The system can either continuously repeat the above steps to determine an updated halt time or the time left by reading the countdown timer and outputting this information or it can determine this information once and determine (calculate) the remaining halt time or time left by comparing this information to a clock within the system to provide an updated halt time or the time left.

Furthermore, the signal can optional be output in the form of an optical or/and acoustic alarm if the halt time or the time left is less than a predetermined value 108. For example, a predetermined value which may be adapted by the user of the vehicle or preset in the system. The predetermined value can be less than 30 seconds, 20 seconds, or 10 seconds. This has the advantage that the driver gets informed that the status of the traffic light will soon change and he has to draw his attention to the changing situation. For example, the alarm may remind the driver that he has to stop or interrupt any activities not relating to driving the vehicle when the alarm indicates that the traffic light will soon turn green again. In the opposite situation, the driver may be reminded that he should prepare to stop the car or that the car will stop when the alarm indicates that the green status will end soon. In addition or alternatively, the value of the countdown timer may be displayed within the vehicle on the dashboard or an on-screen display to inform the driver of the vehicle of the status the traffic light and when its status will change. This may be more comfortable than to view the traffic light directly.

Optionally, the method may also comprise the step of determining the distance of the vehicle to the traffic light (109). The determined distance can be used to further refine the determination step for the halt time before the traffic light or the time left the traffic light allows the vehicle to proceed. For example, a distance indicating that there are about three vehicles before the stopped vehicle will allow to determine that the halt time before the traffic light will be slightly longer than if the vehicle has a shorter distance to the traffic light because the vehicles before the vehicle at issue will require some time to vacate the space before the vehicle at issue can resume driving. The system may add incrementally additional time to the halt time depending on the length of the determined distance to the traffic light post.

The method may also be directed to a vehicle with an automatic engine start stop system. Automatic engine start stop systems determine that a vehicle has stopped for a predetermined period and then switch of the engine to save fuel. This applies mainly to combustion engines.

Optionally, in a further step it is determined that the traffic light comprising a traffic light panel does not allow the vehicle to proceed in the direction of the vehicle 110 and the method further comprises determining a halting time that a vehicle will halt before a traffic light considering the time the vehicle will need to cover the determined distance to the traffic light and the value indicated by the countdown timer and automatically switch off the engine if the determined halting time is greater than a predetermined engine stop time threshold 111. The predetermined engine stop time threshold may be a time period that defines which stop time for an engine is economically or technically acceptable as a stop time for the engine and relates to a minimum value. For example, the predetermined engine stop time threshold may be at least 10, 20, 30, 40, or 50 seconds and a higher value. It this way it is safeguarded that the motor will only be stopped if the amount of fuel saved by the stopping will not be outbalanced by a non-acceptable wear and tear of the engine or the battery. Accordingly, the engine in this situation will not automatically stop after a certain time period, but only if the halting time will be bigger than the predetermined engine stop time threshold.
In continuation of the step just discussed the engine may be switched on again if the updated halt time or time left is the same or lower than a predetermined engine start time threshold. Thus, the predetermined engine start time threshold is a maximum value and may be maximally 10, 8, 6, 5, 3, 2, or 1 seconds depending on the respective time an engine requires to be fully operational after starting the engine. Thus, the predetermined engine start time threshold is a time the engine requires until it is operative again. In this way, the driver of the vehicle does not need to start the engine again manually again thereby increasing the comfort of driving. As a safeguard the system at the same time may activate the brakes or/and put the vehicle in a neutral gear to avoid an uncontrolled acceleration of the vehicle.

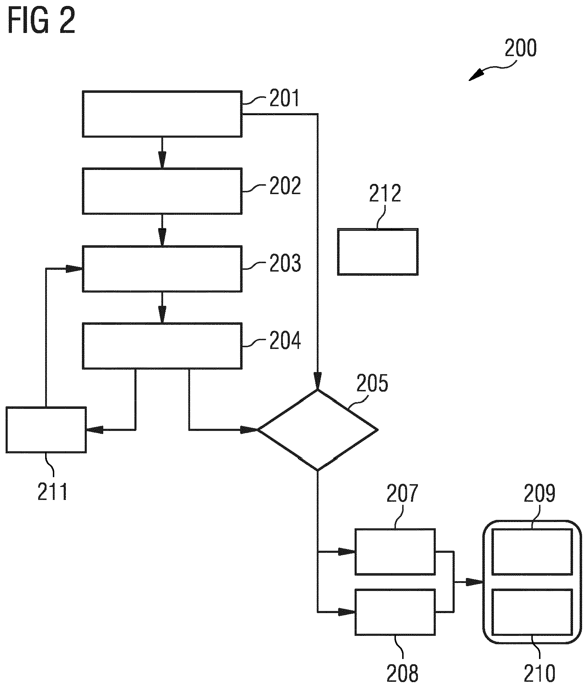

Figure 2 illustrates another exemplary method. A traffic light recognition unit may be used for traffic light recognition 201. A countdown timer may be localized in proximity to the traffic light using circle or rectangle detection of structures 202 in the case whether the countdown timer is separate from the traffic light panel. Optical character recognition may be performed on the detected circle or rectangle to extract the value of the countdown timer from the displayed characgters 203. The characters of the countdown timer may be color classified to determine the status of the countdown timer 204. A linear quadratic estimation methodology that uses a series of measurements observed over time to track landmarks (e.g Landmark Tracker) may be used for traffic counter timer localization 211. Due to the above steps it has now be determined with sufficient confidence that the countdown timer has been identified and the value of the timer can be read/checked again to provide real time information on the value of the timer and thus at least step 203 and following may be repeated.
In addition, the determined value and color of the countdown timer of steps 203 and 204 and the determined traffic light color which can be obtained in 201 may be processed 205. This can result in the determination that if the traffic light and/or the timer character color are red then the value is showing the halt time 207. This can alternatively result in the determination that if the traffic light and/or the timer character color are green then the value is showing the left time 208. If the value of the countdown timer is below a certain threshold (e.g. less than 10 seconds) an optical or acoustic alarm can be activated indicating the change of the status of the traffic light 209. The optical or acoustic alarm can be different depending on whether the signal relates to the halt time or the left time. A display in the car (e.g on the dashboard or on a on screen display) may indicate the optical alarm or/and the value of the countdown 210.

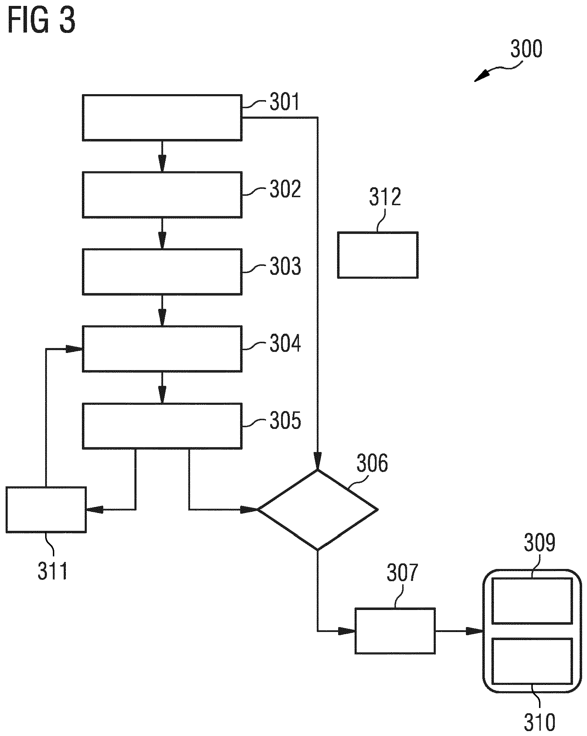

Figure 3 illustrates another exemplary method. A traffic light recognition unit may be used for traffic light recognition 301. The distance to the traffic signal post may be determined using any appropriate method, e.g. LIDAR or RADAR 302.
A countdown timer may be localized in proximity to the traffic light using circle or rectangle detection of structures 303 in the case whether the countdown timer is separate from the traffic light panel. Optical character recognition may be performed on the detected circle or rectangle to extract the value of the countdown timer 304. The characters of the countdown timer may be color classified to determine the status of the countdown timer 305. A linear quadratic estimation method (e.g. Landmark Tracker, LMK) may be used for traffic counter timer localization 311. It has now be determined with sufficient confidence that the countdown timer has been identified and the value of the timer can be read/checked again to provide real time information on the value of the timer and thus at least step 304 and following may be repeated.
In addition, the determined value and color of the countdown timer and the determined distance to the traffic signal post of steps 302, 304 and 305 and the determined traffic light color which can be obtained in 301 may be processed 306. Based on these processed values it is determined whether the engine should be stopped/started taking into consideration the predetermined engine stop/start threshold, the value of the countdown timer and the distance of the traffic post from the vehicle 307. If the value of the red countdown timer is bigger than the engine stop threshold (e.g. 10 seconds) the engine stops 309. If the value of the green countdown timer is smaller than the engine start threshold (e.g. 5 seconds) the engine starts 310.

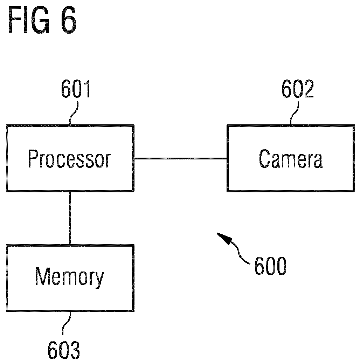

Figure 6 describes a computer system 600 for performing the method. The computer system comprises a camera 602 for capturing the frame, which is processed in the processor, 601. The system, 600, optionally comprises a memory for storing the captured and processed data.

The computer system of the invention may be a personal computer, an application-specific integrated circuit, ASIC, or an field programmable gate array, FPGA.

## Claims

1. Computer-implemented method for determining the status of a traffic signal by a vehicle driving in a direction comprising:
a. Capturing an image frame with a camera;
b. Determining that the image frame comprises a traffic light comprising a traffic light panel;
c. Determining that the image frame comprises a count-down timer in proximity or comprised in the traffic light panel;
d. Performing optical character recognition on the section of the image frame comprising the countdown timer to provide a value indicated by the countdown timer;
e. Determining based on the image frame comprising a traffic light comprising a traffic light panel or characters displayed by the countdown timer whether the traffic light allows or not allows the vehicle to proceed in the direction of the vehicle;
f. Determining the halt time before traffic lights allows the vehicle to proceed in the direction of the vehicle or the time left the traffic light allows the vehicle to proceed in the direction of the vehicle; and
g. Outputting the result of the determination of step f.

2. Method of claim 1, wherein step g. comprises outputting an optical or/and acoustic alarm if the halt time or the time left is less than a predetermined value.

3. Method of claim 1, wherein step b. further comprises determining the distance to the traffic light.

4. Method of claim 3, wherein the vehicle is equipped with an automatic engine start stop system.

5. Method of claim 4, wherein it is determined in step e. that the traffic light comprising a traffic light panel does not allow the vehicle to proceed in the direction of the vehicle and the method further comprises:
h. Determining a halting time that a vehicle will halt before a traffic light considering the time the vehicle will need to cover the determined distance to the traffic light and the value indicated by the countdown timer;
i. Automatically switch off the engine if the determined halting time is greater than a predetermined engine stop time threshold.

6. Method of claim 4, wherein the method further comprises:
j. Determining an updated halting time and switching on the engine if the determined halting time is the same or lower than a predetermined engine start time threshold.

7. Method of any of the preceding claims, wherein the countdown timer is integrated into the traffic light panel.

8. Method of any of the preceding claims, wherein the traffic light panel indicates that the vehicle is not allowed to proceed by a red light.

9. Method of any of the preceding claims, wherein the traffic light panel indicates that the vehicle is not allowed to proceed by a green light.

10. A driver assistance system (1000) for determining the status of a traffic signal comprising:
a. a camera (1002) operable to capture a plurality of images or a single image;
b. a processor (1001) operatively connected to the camera, wherein the processor is operable to perform the operations defined in the preceding claims.

11. The driver assistance system of claim 10, further comprising a RADAR or a LIDAR and the processor is operable to use the information to determine the distance to the traffic light.

12. A vehicle comprising the driver assistance system of any of claims 10 or 11.

13. The vehicle of claim 12, wherein the vehicle is a car, motorcycle, or a truck.

14. Computer-system (1000) comprising a memory (1003) and a processor (1001), wherein said processor is operable to perform the operations defined in any of claims 1-9.

15. Computer-system (1000) of claim 14, where the computer system is an application-specific integrated circuit, ASIC, or an field programmable gate array, FPGA.
